Europäisches Patentamt

European Patent Office

Office européen des brevets

(11) Veröffentlichungsnummer: **0 467 071 A2**

## (12) EUROPÄISCHE PATENTANMELDUNG

(21) Anmeldenummer: **91109668.3**

(22) Anmeldetag: **13.06.91**

(51) Int. Cl.5: **H04M 1/72**, H04M 19/04

(30) Priorität: **19.07.90 DE 4022959**

(43) Veröffentlichungstag der Anmeldung:
**22.01.92 Patentblatt 92/04**

(84) Benannte Vertragsstaaten:
**FR GB IT NL SE**

(71) Anmelder: **TELENORMA GMBH**
**Mainzer Landstrasse 128-146**
**W-6000 Frankfurt/Main(DE)**

(72) Erfinder: **Bunkenburg, Michael, Ing.-grad.**
**Fontanestrasse 25**
**W-6000 Frankfurt/Main 50(DE)**
Erfinder: **Garcia, Raymond, Dipl.-Phys.**
**Lauteschlägerstrasse 4**
**W-6100 Darmstadt(DE)**
Erfinder: **Giebler, Hans-Jürgen, Dipl.-Ing.**
**Karlsbaderstrasse 12**
**W-6369 Nidderau 3(DE)**

(54) **Anruforgan für Telekommunikations-Endgeräte.**

(57) 2.1 Mit einem besonderen Anruforgan soll ein Anrufkriterium gebildet werden, welches eine anzurufende Person so diskret auf einen vorliegenden Anruf hinweist, daß unbeteiligte Personen nicht aufmerksam werden können. Dabei soll das tragbare Kommunikations-Endgerät mit diesem Anruforgan oder das Anruforgan als Einzelgerät so klein und handlich sein, daß es am Körper des Benutzers getragen werden kann.

2.2 In dem besonderen Anruforgan wird bei einem empfangenen Anrufsignal ein pulsierendes Kraftfeld erzeugt, wobei durch einen dadurch bewegten Schwinganker Vibrationen entstehen. Dadurch wird einem Benutzer ein Anruf bemerkbar gemacht, ohne daß ein hörbares oder sichtbares Signal entstehen kann, welches in der unmittelbaren Umgebung als störend empfunden werden könnte.

2.3 Ein ankommender Anruf wird lediglich durch den Benutzer deutlich spürbar erkannt, ohne daß dies in der unmittelbaren Umgebung wahrgenommen wird. Der Benutzer kann je nach Situation dann entscheiden, ob er zur Beantwortung des Anrufes den Raum verlassen will, um andere Personen nicht zu stören.

Fig. 2

EP 0 467 071 A2

Die Erfindung betrifft ein Anruforgan für Telekommunikations-Endgeräte nach dem Oberbegriff des Patentanspruchs 1.

Aus der DE-OS 19 39 385, wo eine Schaltungsanordnung für Fernsprechteilnehmerstellen beschrieben wird, ist es bekannt, vom akustischen Anrufsignal ein zusätzliches optisches Anrufsignal zu gewinnen. Zum Einschalten einer Lampe, welche den Telefonapparat im Anrufzustand beleuchten soll, ist ein Relais vorgesehen. Dieses Relais wird durch eine mechanische oder elektrische Kopplung mit dem Anrufkreis des Fernsprechapparates betätigt. Mit dem Einschalten eines optischen Anrufsignals soll in einem verdunkelten Raum das Auffinden eines Fernsprechgerätes erleichtert werden. Außerdem soll insbesondere bei Nachtanrufen erreicht werden, daß nur derjenige aufgeweckt wird, in dessen Nähe sich die Fernsprechteilnehmerstation befindet. Sind jedoch mehrere Personen in einem Raum, so kann nicht erwartet werden, daß nur eine Person auf den Anruf aufmerksam wird. Bei einem derartigen Konzept werden also auch die Personen von einem Anruf gestört, für die der Anruf nicht bestimmt ist.

Aus der DE-OS 32 36 194 ist ein schnurloser Fernsprechapparat bekannt. Wie im letzten Absatz auf Seite 6 beschrieben ist, wird ein Anruf von dem ortsfesten Teil des Fernsprechapparates empfangen und in ein digitales Ruftelegramm umgewandelt, welches von der Antenne abgestrahlt wird. Im beweglichen Teil des Fernsprechapparates wird dieses Signal empfangen und über eine Leitung zu einer Steuerung gegeben, welche einen Wecker betätigt. Hierbei handelt es sich also um ein akustisches Anrufsignal, welches selbstverständlich nicht nur von dem jeweiligen Benutzer wahrnehmbar ist.

Bei Fernsprechapparaten mit akustischen und/oder optischen Anruforganen sind die Anrufsignale immer von all denjenigen Personen wahrnehmbar, welche sich in der Nähe des betreffenden Fernsprechapparates befinden. Derartige Anrufsignale können als störend empfunden werden, wenn schnurlose Fernsprechapparate oder Funkrufempfänger von Personen benutzt werden, welche immer für einen Anruf erreichbar sein wollen und sich beispielsweise in Besprechungen oder Konferenzen befinden. Wenn in solchen Situationen Anrufe ankommen, so kann dies beispielsweise zur Störung eines Vortrages führen.

Ausgehend vom vorgenannten Stand der Technik besteht die Aufgabe der Erfindung darin, ein Anruforgan vorzustellen, womit ein Anrufkriterium gebildet wird, das eine anzurufende Person so diskret auf einen vorliegenden Anruf hinweist, daß unbeteiligte Personen nicht aufmerksam werden können. Dabei soll das tragbare Kommunikations-Endgerät mit diesem Anruforgan oder das Anruforgan als Einzelgerät so klein und handlich sein, daß es am Körper des Benutzers getragen werden kann.

Zur Lösung dieser Aufgabe sind Merkmale vorgesehen, wie sie im Patentanspruch 1 angegeben sind.

Damit wird in vorteilhafter Weise erreicht, daß ein ankommender Anruf von einem Benutzer deutlich spürbar erkannt werden kann, ohne daß dies in der unmittelbaren Umgebung wahrgenommen wird. Der Benutzer kann dann je nach Situation entscheiden, ob er zur Beantwortung des Anrufes den Raum verlassen will, um andere Personen nicht zu stören.

Bei den in den Unteransprüchen angegebenen Weiterbildungen der Erfindung wird aufgezeigt, wie das Anruforgan beschaffen sein kann und auf welche Weise es den betrieblichen Anforderungen anpaßbar ist.

Ein Ausführungsbeispiel der Erfindung wird nachfolgend anhand von Zeichnungen näher erläutert.

Es zeigt

Fig. 1:   Das Blockschaltbild eines Anruforgans.

Fig. 2:   Ein Kommunikations-Endgerät mit eingebautem Anruforgan.

Fig. 3:   Ein Kommunikations-Endgerät mit externem Anruforgan und drahtloser Übertragung des Anrufsignals.

Fig. 4:   Ein Kommunikations-Endgerät mit über ein Kabel angeschlossenem Anruforgan.

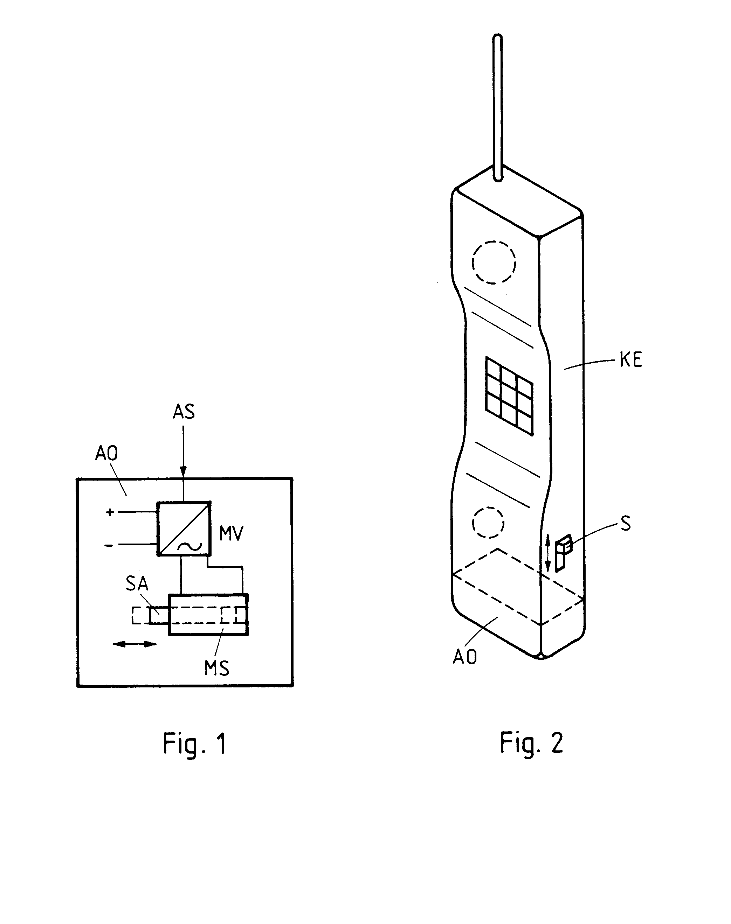

Bei dem in Fig. 1 gezeigten Blockschaltbild des Anruforgans AO wird das Anrufsignal AS einem Multivibrator MV zugeführt. Damit werden Stromschwingungen erzeugt, welche einer Magnetspule MS zugeführt werden. In der Magnetspule befindet sich ein Schwinganker SA welcher durch das entstehende Magnetfeld in Vibrationen versetzt wird. Durch die Frequenz dieser Vibrationen des Schwingankers SA und die sonstige Ausführung des Anruforgans wird gewährleistet, daß nur Vibrationen wahrnehmbar sind, aber keine hörbare Geräusche entstehen. Wenn das Anruforgan AO in das Kommunikations-Endgerät KE eingebaut ist, wie dies in Fig. 2 dargestellt ist, so wird es an die dort befindliche Stromversorgung angeschlossen. In dem Anruforgan AO ist jedoch auch Raum für eine eigene Stromversorgung vorgesehen, welche dann eingebaut sein muß, wenn das Anruforgan AO außerhalb von einem Kommunikations-Endgerät KE drahtlos betrieben wird.

Bei dem in Fig. 2 dargestellten Kommunikations-Endgerät sei angenommen, daß sich das Anruforgan AO im gleichen Gehäuse befindet. Es ist jedoch auch denkbar, daß das Anruforgan AO steckbar am Kommunikations-Endgerät KE befestigt ist. Am Kommunikations-Endgerät KE, wobei es sich vorzugsweise um ein Mobiltelefon handeln kann, ist ein Schalter S angeordnet. Wenn dieser Schalter S betätigt wird, werden die im Kommunikations-Endgerät befindlichen akustischen Anruforgane außer Betrieb gesetzt. Das Anrufsignal AS wird dann direkt zu dem Anruforgan AO geleitet, welches ein nicht hörbares Anrufkriterium in Form von Vibrationen erzeugt. Wenn ein derart ausgestaltetes Kommunikations-Endgerät KE in der Kleidung eines Benutzers getragen wird, so sind Anrufsignale deutlich wahrnehmbar, ohne daß unbeteiligte Personen gestört werden.

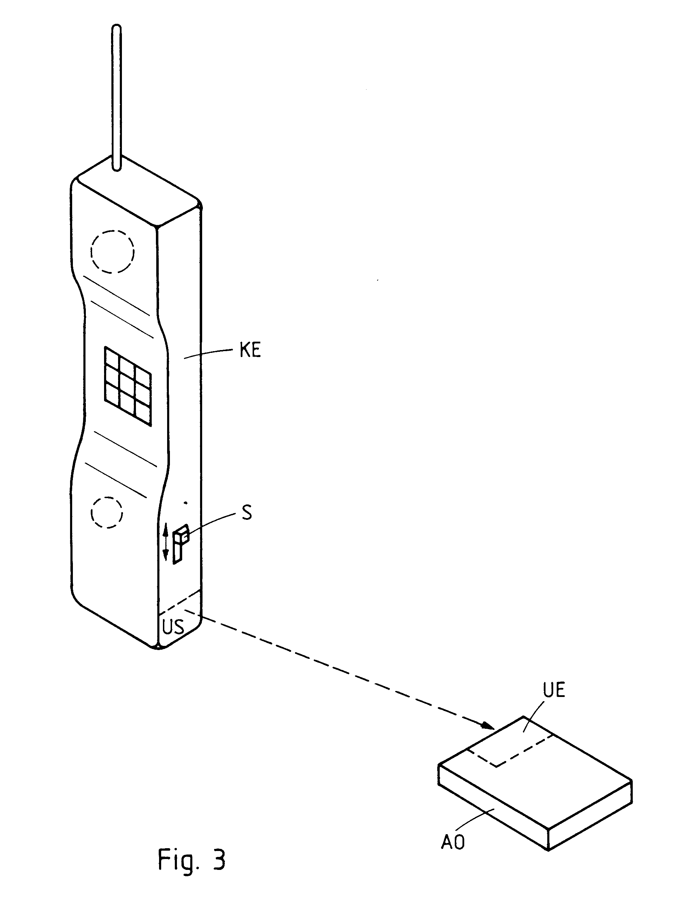

Bei dem in Fig. 3 dargestellten Anruforgan AO handelt es sich um ein unabhängig arbeitendes Gerät, welches die von einem am Kommunikations-Endgerät KE befindlichen Sender US drahtlos ausgesendeten Anrufsinale empfangen kann. Hierfür ist beispielsweise eine Ultraschall-Übertragungsstrecke vorgesehen. Das Anrufsignal wird also im Kommunikations-Endgerät KE umgesetzt und auf einen Ultraschallsender US gegeben. Dieser sendet das mit einer individuellen Codierung versehene Anrufsignal aus, so daß es vom Ultraschallempfänger UE des Anruforgans AO empfangen werden kann. Bei einer derartigen Betriebsweise genügt es, daß der Benutzer lediglich das relativ kleine Anruforgan AO bei sich trägt, ohne daß sich das Kommunikations-Endgerät KE in seiner unmittelbaren Nähe befinden muß. In diesem Fall kann es sich auch um ein ortsfestes Kommunikations-Endgerät KE handeln, welches sich dann im gleichen Raum befinden muß. Auch in diesem Betriebsfall ist ein Schalter S am Kommunikations-Endgerät KE vorgesehen, womit das akustische Anruforgan abgeschaltet wird. Gleichzeitig wird durch Betätigen des Schalters S die Aktivierung der drahtlosen Übertragungsstrecke veranlaßt.

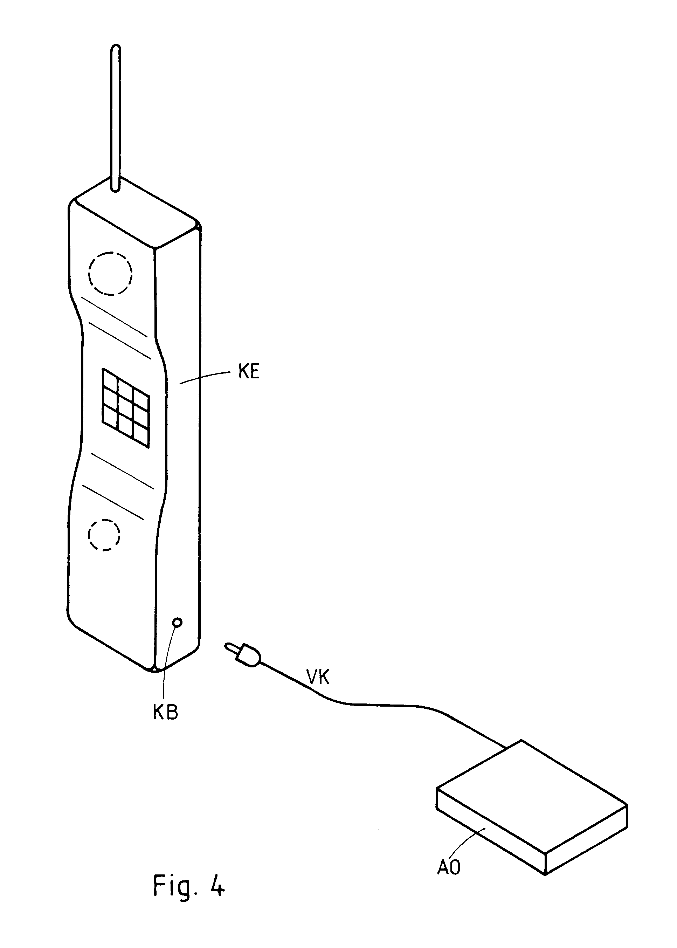

In der Fig. 4 ist dargestellt, wie ein Anruforgan AO über ein Verbindungskabel VK mit einem Kommunikations-Endgerät KE verbunden sein kann. Am Kommunikations-Endgerät KE muß dann lediglich eine Kontaktbuchse KB vorgesehen sein. Beim Einführen des Steckers für das Verbindungskabel VK wird dann ein Kontakt betätigt, welcher das akustische Anruforgan abschaltet. Bei dieser Version wird über das Verbindungskabel VK das Anrufsignal AS übertragen und die Stromversorgung zugeführt, so daß im Anruforgan AO keine eigene Batterie vorhanden sein muß.

**Patentansprüche**

1. Anruforgan für Telekommunikations-Endgeräte, insbesondere Mobiltelefone und Funkrufempfänger, womit ein über eine Anschlußleitung oder drahtlos ankommendes elektrisches Anrufsignal in ein für den Benutzer wahrnehmbares Kriterium umgewandelt wird, wobei unbeteiligte Personen nicht gestört werden, **dadurch gekennzeichnet,** daß in dem Anruforgan (AO) bei einem empfangenen Anrufsignal (AS) ein pulsierendes Kraftfeld erzeugt wird, wobei durch einen dadurch bewegten Schwinganker (SA) Vibrationen entstehen, die einem Benutzer einen Anruf signalisieren, ohne daß ein hörbares oder sichtbares Signal entsteht.

2. Anruforgan nach Anspruch 1, **dadurch gekennzeichnet,** daß für die Erzeugung eines elektromagnetischen Feldes eine Magnetspule (MS) vorgesehen ist.

3. Anruforgan nach Anspruch 1, **dadurch gekennzeichnet,** daß das Anruforgan (AO) als selbsttätig funktionsfähige Baugruppe in einem mobilen Kommunikations-Endgerät (KE) untergebracht ist und manuell durch einen dafür vorgesehenen Schalter (S) anstelle von akustischen oder optischen Anruforganen einschaltbar ist.

4. Anruforgan nach Anspruch 1, **dadurch gekennzeichnet,** daß das Anruforgan (AO) als selbsttätig funktionsfähige Baugruppe sich außerhalb eines Kommunikations-Endgerätes (KE) befindet und von diesem drahtlos Anrufsignale (AS) übermittelt bekommt, wenn dort ein dafür vorgesehener Schalter (S) betätigt ist, womit akustische oder optische Anruforgane ausgeschaltet sind.

5. Anruforgan nach Anspruch 4, **dadurch gekennzeichnet,** daß bei der drahtlosen Übermittlung eines Anrufsignals (AS) vom Kommunikations-Endgerät (KE) zum Anruforgan (AO) eine individuelle Codierung vorgesehen ist.

6. Anruforgan nach Anspruch 1, **dadurch gekennzeichnet,** daß das Anruforgan (AO) als selbsttätig funktionsfähige Baugruppe sich außerhalb eines Kommunikations-Endgerätes (KE) befindet und von diesem Anrufsignale (AS) über ein Verbindungskabel (VK) übermittelt bekommt, wobei akustische oder optische Anruforgane ausgeschaltet sind, wenn das Verbindungskabel (VK) gesteckt ist.

7. Anruforgan nach Anspruch 1, **dadurch gekennzeichnet,** daß die Frequenz der Vibrationen des Schwingankers (SA) niedriger ist als die Frequenzen hörbarer Töne.

8. Anruforgan nach Anspruch 1,
**dadurch gekennzeichnet,**
daß der Rhythmus der Vibrationen des Schwingankers (SA) dem Rhythmus des Anrufsignals (AS) entspricht.

AS

AO

+

−

MV

SA

MS

Fig. 1

KE

S

AO

Fig. 2

Fig. 3

Fig. 4